# FASCICULE DE BREVET EUROPEEN

(11) **EP 1 073 254 B1**
(45) Date de publication et mention de la délivrance du brevet: **24.09.2008**
(21) Numéro de dépôt: 00402078.0
(22) Date de dépôt: 21.07.2000
(51) Int. Cl.: H04N 1/00

(54) **Procédé de consultation d'un site d'informations par un terminal de communication et serveur de consultation associé.**
Verfahren zum Abfragen eines Informationsorts von einem Kommunikationsendgerät und zugehöriger Abfrageserver
Method for consulting an information site by a communication terminal and associated consultation server

(30) Priorité: 30.07.1999 FR 9909931
(43) Date de publication de la demande: 31.01.2001
(73) Titulaire: SAGEM Communication, 75015 Paris (FR)
(72) Inventeur: Omgba, Louis Bede, 95280 Jouy Le Moutier (FR)
(74) Mandataire: Bloch, Gérard

(56) Documents cités:
- EP-A- 0 812 100
- WO-A-97/32427
- WO-A-99/18716
- GB-A- 2 254 525
- PATENT ABSTRACTS OF JAPAN vol. 1999, no. 03, 31 mars 1999 (1999-03-31) & JP 10 327284 A (NIPPON TELEGR &TELEPH CORP <NTT>), 8 décembre 1998 (1998-12-08)

## Description

Un réseau informatique tel que l'Internet permet à des utilisateurs, équipés d'un terminal de communication, de visiter des sites d'informations, plus couramment appelés "sites Web", hébergés par des serveurs de l'Internet et comportant une pluralité de pages Web, généralement de format HTML, contenant des éléments d'informations multimédia (images, textes, sons, animations, etc.) et des liens hypertextes reliant les pages entre elles. Chaque page d'un site Web a une adresse URL (Uniform Resource Location - localisation de ressource uniforme) sur l'Internet, l'adresse URL de la page d'accueil du site correspondant à l'adresse URL du site lui-même.

Le terminal, par exemple un ordinateur PC (Personal Computer - ordinateur personnel), dispose d'un accès à l'Internet et comporte une application de connexion à l'Internet, par exemple par connexion téléphonique à un fournisseur d'accès à l'Internet, et une application de navigation sur l'Internet, ou "navigateur Internet".

Pour visiter, ou consulter, un site Web, le terminal se connecte à l'Internet et lance le navigateur. Une fenêtre de navigation s'affiche alors sur l'écran du terminal. Elle contient une zone de commande, permettant d'exécuter diverses commandes (lancement d'une recherche d'informations, visualisation de la page précédente ou suivante d'un site, impression, interruption du téléchargement en cours, etc.), une zone d'adresse et une zone de visualisation de page Web. L'utilisateur saisit ensuite l'adresse URL du site dans la zone d'adresse et lance le téléchargement de la page d'accueil de ce site. Sur requête adressée au site, le terminal télécharge la page d'accueil qui s'affiche dans la zone de visualisation de la fenêtre de navigation. Pour se déplacer dans le site, de page en page, il suffit à l'utilisateur de sélectionner un lien hypertexte, contenu dans la page affichée dans la zone de visualisation.

Certains terminaux, et notamment certains télécopieurs, ne comportent pas de navigateur Internet.

La présente invention propose de permettre à ces télécopieurs, et plus généralement à tout terminal de communication ayant des capacités Internet limitées, de quand même visiter des sites Internet.

La demanderesse tire son origine d'un problème lié à l'Internet. Toutefois, elle n'entend pas limiter la portée de sa demande à cet exemple particulier mais l'étendre à tout réseau informatique.

A cet effet, l'invention concerne un procédé de consultation, par un télécopieur, d'un site d'informations d'un réseau informatique, comprenant au moins une page d'informations avec une adresse informatique selon la revendication 1.

Il suffit ainsi au télécopieur de se connecter au réseau informatique et de transmettre au serveur de consultation l'adresse informatique de la page d'informations qu'il souhaite consulter, le serveur de consultation se chargeant de rapatrier la page pour la retransmettre vers le télécopieur.

L'effet technique de l'invention est donc de laisser se connecter le télécopieur au réseau informatique pour consulter un site internet. Le procédé du document PATENT ABSTRACTS OF JAPAN vol.1999, no. 03, 31 mars 1999 (1999-03-31) & JP 10 327284 tente de résoudre ce même problème, mais le résoud de manière différente.

Dans ce document, il est suggéré que le télécopieur se connecte à un appareil intermédiaire par le biais d'un réseau téléphonique, ce qui implique que cet appareil peut être consulté par tous télécopieurs, qu'il est donc compliqué et a un prix important.

Dans le procédé du document WO 97/32427, la consultation se fait à partir d'un téléphone, donc il ne s'agit pas de consultation par un télécopieur. WO 99/18716 divulgue un procédé similaire utilisant un intermédiaire pour connecter un télécopieur à l'internet. Un télécopieur qui se connecte à un réseau informatique est connu de EP 0927945. Quant au télécopieur de EP 0 835 011, il ne consulte pas de site internet, mais enregistre des données d'image dans un site internet.

Avantageusement, le télécopieur envoie au serveur la requête d'acquisition par message électronique.

Dans un mode de réalisation particulier, le serveur insère la page requise dans un message électronique pour la retransmettre vers le télécopieur.

Dans ce cas, le serveur de consultation peut transmettre le message contenant la page requise vers le serveur de messagerie qui le stocke provisoirement, jusqu'à son téléchargement dans le télécopieur, sur requête de celui-ci.

Le serveur de consultation peut également stocker provisoirement le message contenant la page requise dans une boîte à lettres locale, jusqu'à son émission vers le télécopieur, sur requête de celui-ci.

Dans un autre mode de réalisation, le télécopieur se connecte au serveur de consultation, lui adresse la requête d'acquisition et, au cours de la même connexion, reçoit la page requise, après son acquisition par le serveur de consultation.

Dans ce cas, le télécopieur adresse au serveur de consultation la requête d'acquisition de la page et reçoit la page requise, au cours de la même connexion au réseau informatique, autrement dit en direct, « en ligne ».

L'invention sera mieux comprise à l'aide de la description suivante d'un mode de réalisation particulier du procédé de consultation, par un terminal de communication, d'un site d'informations d'un réseau informatique, en référence au dessin annexé sur lequel:

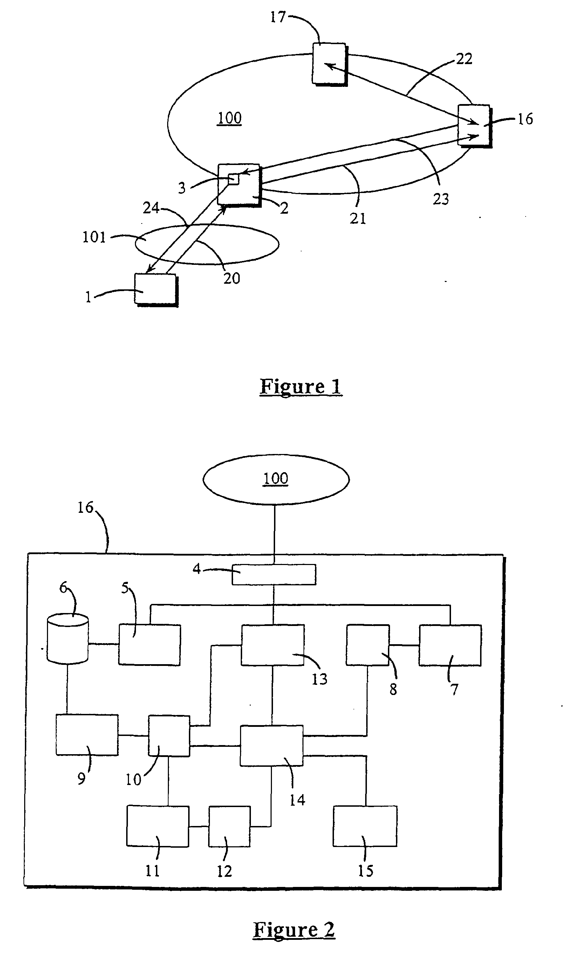

- la figure 1 représente le terminal relié au réseau informatique et le serveur de consultation et
- la figure 2 représente un schéma bloc fonctionnel du serveur de consultation.

Dans l'exemple particulier de la description, le procédé de l'invention permet à un télécopieur 1 de consulter un site d'informations 17 de l'Internet 100, à l'aide d'un serveur de consultation 16.

On rappelle ici qu'un site d'informations de l'Internet 100, plus couramment appelé site "Web" par l'homme du métier, est hébergé dans un serveur informatique de l'Internet 100 et comprend une ou plusieurs pages d'informations, ou pages "Web", contenant des éléments d'informations multimédia (textes, images, animations, sons, vidéos, etc.) et des liens hypertextes reliant les pages entre elles. Les pages Web d'un site peuvent également être reliées aux pages Web d'un autre site, par des liens hypertextes. Chaque page Web a une adresse informatique URL (Uniform Resource Location - localisation de ressource uniforme) sur l'Internet 100. Les pages du site d'informations 17 sont ici au format HTML (Hyper Text Markup Language - langage de marquage hypertexte).

Le télécopieur 1, relié à un réseau téléphonique 101, comprend, outre les éléments standards d'un télécopieur, une application de connexion à l'Internet 100 et une application de messagerie électronique. Il dispose en outre d'un accès à l'Internet 100 et d'un service de messagerie électronique, fournis par un serveur 2. Une boîte à lettres 3, attribuée au télécopieur 1, est située dans le serveur 2 et destinée à stocker provisoirement les messages destinés au télécopieur 1, jusqu'à leur téléchargement dans le télécopieur 1, sur requête de celui-ci. Une adresse de messagerie électronique est en outre attribuée à cette boîte aux lettres 3 et au télécopieur 1 associé.

L'application de connexion à l'Internet 100 permet au télécopieur 1 de se connecter à l'Internet 100, par connexion téléphonique au serveur 2 à travers le réseau téléphonique 101.

L'application de messagerie électronique permet au télécopieur 1 d'émettre et de recevoir des messages électroniques. Les messages transmis à travers l'Internet 100 et destinés au télécopieur 1 sont reçus par le serveur 2 qui les stocke provisoirement dans la boîte à lettres 3, jusqu'à leur téléchargement dans le télécopieur 1, sur requête de celui-ci.

On rappelle ici qu'un message électronique contient un en-tête, un corps de message et, éventuellement, une ou plusieurs pièces jointes. L'en-tête contient un champ "FROM" de provenance, un champ "TO" de destination et divers autres champs, et notamment un champ objet. Les champs "FROM" et "TO" sont destinés à contenir les adresses respectives de messagerie de l'émetteur et du récepteur du message. Le champ objet peut contenir l'objet du message et/ou tout autre type d'informations. Le corps du message est destiné à contenir un message, de format ASCII. Enfin, les pièces jointes sont des fichiers de données de divers types (sons, images, textes, etc.) et de divers formats (JPG, TIFF, GIF, DOC, etc.).

Le télécopieur 1 peut émettre et recevoir des télécopies, ici de format TIFF, à travers l'Internet 100, les télécopies étant insérées dans des messages électroniques, en pièces jointes.

On soulignera ici que le télécopieur 1 est dépourvu de moyens, tels qu'un navigateur Internet, lui permettant de consulter un site Web, par téléchargement de pages de ce site. En outre, le télécopieur 1 n'a pas de capacités pour lire des pages de format HTML.

Le serveur de consultation 16 est destiné, sur requêtes de terminaux d'utilisateur, à acquérir des pages Web et à les retransmettre vers les terminaux requérants, éventuellement après traduction. Il dispose d'une adresse de messagerie électronique sur l'Internet 100.

Le serveur 16 comprend une interface 4 de connexion permanente à l'Internet 100, un bloc 5 de réception de messages électroniques, un bloc 7 d'émission de messages électroniques, un bloc 9 de traitement des messages reçus, un bloc d'identification 11, un répertoire d'utilisateurs 12, un bloc 13 d'acquisition de pages Web, un bloc de traduction 15 et un bloc 14 de préparation de messages électroniques.

Le bloc de réception 5 est destiné à recevoir des messages électroniques, transmis à travers l'Internet 100. Il est relié à l'interface de connexion 4 et à une mémoire de réception 6, ou "boîte à lettres", destinée à stocker des messages électroniques reçus.

Le bloc d'émission 7 est destiné à émettre des messages électroniques, à travers l'Internet 100. Il est relié à l'interface de connexion 4 et à une mémoire d'émission 8, destinée à stocker des messages électroniques en attente d'émission.

Le bloc de traitement 9 est relié à la boîte à lettres 6 et à une table 10 de requêtes d'acquisition de page(s) Web. Il est destiné à traiter, à dépouiller, les messages reçus, afin d'en extraire les informations utiles et de les mémoriser dans la table 10.

La table de requêtes 10 est une mémoire destinée à mémoriser, pour chaque requête reçue d'acquisition de page(s) Web, l'adresse de messagerie et les données d'identification du terminal requérant et l'adresse URL de la ou des pages requises.

Le répertoire d'utilisateurs 12 est une mémoire de stockage, pour chaque terminal d'utilisateur, des données d'identification du terminal, comportant ici un nom et un mot de passe, et les capacités de lecture, ou d'exploitation, du terminal, à savoir le ou les formats de fichiers de données exploitables par le terminal. Le télécopieur 1 est répertorié dans le répertoire 12, avec des capacités de lecture du format TIFF.

Le bloc d'identification 11, relié au répertoire 12 et à la table 10, est destiné à vérifier les données d'identification d'un terminal d'utilisateur, extraites d'un message reçu, par comparaison avec celles stockées dans le répertoire 12.

Le bloc d'acquisition 13 est relié à la table de requêtes 10, à l'interface de connexion 4 et au bloc 14 de préparation de messages. Il est destiné à acquérir des pages de sites Web, requises par des terminaux d'utilisateur, par téléchargement, comme cela sera explicité plus loin.

Le bloc 14 de préparation de message est relié à la table de requête 10, au répertoire 12, au bloc d'acquisition 14, au bloc de traduction 15 et à la mémoire d'émission 8. Il est destiné à préparer des messages électroniques, destinés au terminaux requérants, dans lesquels sont insérées les pages requises.

Dans le cas où un terminal d'utilisateur, ayant requis une page Web, n'a pas les capacités nécessaires pour lire cette page, le bloc de traduction 15 est destiné à traduire la page, dans un format exploitable par le terminal.

Enfin, le serveur 16 comprend un bloc de commande, en l'espèce un microprocesseur, non représenté, auquel tous les éléments décrits ci-dessus sont reliés, destiné à commander le fonctionnement du serveur 16.

Après la description du serveur de consultation 16, le procédé de consultation, par le télécopieur 1, d'un site d'informations 17 de l'Internet 100, correspondant au fonctionnement du serveur 16, va maintenant être décrit.

Le site d'informations 17 a une adresse URL, correspondant à l'adresse URL de sa page d'accueil.

Sous la commande d'un utilisateur, le télécopieur 1 prépare un message électronique contenant, dans le champ "FROM", l'adresse de messagerie du télécopieur 1, dans le champ "TO", l'adresse de messagerie du serveur 16, dans le champ objet, le nom et le mot de passe d'utilisateur du télécopieur 1 et, dans le corps du message l'adresse URL du site 17. Ce message constitue une requête d'acquisition de la page d'accueil du site 17.

Puis le télécopieur 1 se connecte à l'Internet 100, par connexion téléphonique au serveur 2 à travers le réseau téléphonique 101, et transmet au serveur 2 le message de requête d'acquisition de la page (étape 20). Le serveur 2 retransmet le message à travers l'Internet 100 et le message est acheminé à travers l'Internet 100 jusqu'au serveur de consultation 16 (étape 21).

Dans le serveur 16, le bloc de réception 5 reçoit le message du télécopieur 1 et le stocke dans la boîte à lettres 6. Par la suite, le bloc de traitement 9 prélève le message dans la boîte à lettres 6, en extrait l'adresse de messagerie, le nom et le mot de passe du télécopieur 1 ainsi que l'adresse URL de la page requise, et enregistre ces informations dans la table de requêtes 10.

Le bloc d'identification 11 vérifie le nom et le mot de passe du télécopieur 1, enregistrés dans la table 10, par comparaison avec ceux stockés dans le répertoire d'utilisateurs 12.

Les données d'identification du télécopieur 1 étant correctes, le bloc d'acquisition 13 extrait de la table 10 l'adresse URL de la page requise par le télécopieur 1 et adresse au site 17 une requête d'acquisition, ou de téléchargement, de la page, contenant l'adresse URL de celle-ci, à travers l'Internet 100. Par téléchargement depuis le site 17 à travers l'Intemet 100, le serveur 16 reçoit la page d'accueil du site 17 et ici l'adresse URL de chacune des pages reliées à la page d'accueil par un lien hypertexte (étape 22). Après téléchargement de la page requise, le bloc d'acquisition 13 fournit au bloc 14 de préparation de message les données d'identification du télécopieur 1, extraites de la table 10, ainsi que la page et les adresses URL acquises.

Le bloc 14 lit les capacités de lecture du télécopieur 1 dans le répertoire d'utilisateurs 12 et, la page acquise étant ici au format HTML, il la fait traduire dans le format TIFF par le bloc de traduction 15. Par ailleurs, le bloc 14 extrait l'adresse de messagerie du télécopieur 1 de la table de requêtes 10 et prépare un message, destiné au télécopieur 1, contenant, dans le champ "TO", l'adresse de messagerie du télécopieur 1 et, dans le champ "FROM", l'adresse de messagerie du serveur 16. Il insère dans ce message, en pièces jointes, la traduction de la page acquise et un document, de format TIFF, contenant les adresses URL des pages reliées à la page requise. Le message est stocké dans la mémoire d'émission 8.

Le bloc d'émission 7 émet ensuite le message qui est acheminé, à travers l'Internet 100, jusqu'au serveur 2 (étape 23). Le serveur 2 stocke provisoirement le message dans la boîte à lettres 3, jusqu'à son téléchargement dans le télécopieur 1, sur requête de celui-ci (étape 24).

Dans la description qui vient d'être faite, le serveur 2 fait fonction de fournisseur d'accès à l'Internet 100 et serveur de messagerie électronique. On pourrait tout aussi bien prévoir un serveur fournisseur d'accès à l'Internet et un serveur de messagerie électronique, distincts l'un de l'autre.

Dans un deuxième mode de réalisation de l'invention, le serveur de consultation comprend une boîte à lettres locale, dans laquelle il stocke provisoirement le message contenant la page requise. Pour récupérer la page requise, le télécopieur requérant se connecte à l'Internet et adresse au serveur de consultation une requête de transfert de la page, par message électronique. Après réception de la requête, le serveur de consultation émet le message, contenant la page requise, vers le télécopieur requérant, à travers l'Internet. Le message est reçu et stocké provisoirement par le serveur de messagerie du télécopieur, jusqu'à son téléchargement dans le télécopieur sur requête de celui-ci adressée au serveur de messagerie.

En variante, le serveur et le télécopieur pourraient communiquer l'un avec l'autre en utilisant un protocole de communication spécifique.

Dans un troisième mode de réalisation de l'invention, après s'être connecté à l'Internet, le télécopieur se connecte au serveur de consultation, lui adresse une requête d'acquisition d'une page Web, contenant l'adresse URL de celle-ci, et, au cours de la même connexion, reçoit la page requise, après son acquisition par le serveur de consultation. Dans ce cas, l'émission de la requête d'acquisition d'une page et la réception de la page par le télécopieur ont lieu lors d'une même connexion du télécopieur à l'Internet, au cours d'une communication directe entre le télécopieur et le serveur de consultation, suivant un protocole de communication spécifique.

Pour les modes de réalisation de l'invention explicités ci-dessus nécessitant un protocole de communication spécifique, le télécopieur et le serveur de consultation comprennent chacun une application pour exécuter ce protocole de communication, leur permettant de communiquer l'un avec l'autre sans utiliser de message électronique.

Au lieu de traduire lui-même la page, le serveur de consultation pourrait la faire traduire par un serveur de traduction de l'Internet, comprenant des moyens pour traduire une page d'un format donné dans un autre format, sur requête d'un utilisateur, tel que le serveur de consultation.

Le télécopieur pourrait également transmettre au serveur de consultation ses capacités de lecture, ou d'exploitation, de données pour mettre à jour le répertoire d'utilisateur.

Enfin, le télécopieur pourrait comprendre une application permettant de préparer, et éventuellement d'émettre vers le serveur de consultation, la requête d'acquisition de la page Web, de façon automatique.

## Revendications

1. Procédé de consultation, par un télécopieur (1), comportant des moyens de connexion à un réseau informatique (100) et des moyens de messagerie électronique, d'un site d'informations (17) du réseau informatique (100), comprenant au moins une page d'informations avec une adresse informatique (URL), dans lequel
- le télécopieur (1) prépare une requête d'acquisition d'une page du site (17) constitué d'un message électronique contenant l'adresse (URL) du site (17),
- le télécopieur (1) se connecte au réseau informatique (100) par connexion téléphonique à un serveur de messagerie (2) et transmet le message au serveur (2),
- le serveur (2) retransmet le message à travers le réseau informatique (100) à un serveur de consultation (16) et adresse la requête d'acquisition d'une page du site (17), contenant l'adresse informatique de ladite page, au serveur de consultation (16) du réseau informatique (100) et
- le serveur (16) acquiert la page requise pour la retransmettre vers le télécopieur (1).

2. Procédé selon la revendication 1, dans lequel le télécopieur (1) envoie au serveur (16) la requête d'acquisition par message électronique.

3. Procédé selon l'une des revendications 1 et 2, dans lequel le serveur (16) insère la page requise dans un message électronique pour la retransmettre vers le télécopieur (1).

4. Procédé selon la revendication 3, dans lequel le serveur de consultation (16) transmet le message contenant la page requise vers le serveur de messagerie (2) qui le stocke provisoirement, jusqu'à son téléchargement dans le télécopieur (1), sur requête de celui-ci.

5. Procédé selon la revendication 4, dans lequel le serveur de consultation (16) stocke provisoirement le message contenant la page requise dans une boîte à lettres locale, jusqu'à son émission vers le télécopieur requérant, sur requête de celui-ci.

6. Procédé selon l'une des revendications 1 à 3, dans lequel le télécopieur (1) se connecte au serveur de consultation (16), lui adresse la requête d'acquisition et, au cours de la même connexion, reçoit la page requise, après son acquisition par le serveur de consultation (16).

7. Procédé selon l'une des revendications 1 à 6, dans lequel le serveur de consultation (16) traduit la page dans un format exploitable par le télécopieur (1).

8. Procédé selon l'une des revendications 1 à 6, dans lequel le serveur de consultation (16) fait traduire la page, dans un format exploitable par le télécopieur (1), par un serveur de traduction.

9. Procédé selon l'une des revendications 7 et 8, dans lequel le télécopieur (1) transmet au serveur de consultation (16) ses capacités d'exploitation de données.

10. Procédé selon l'une des revendications 1 à 9, dans lequel, la page requise contenant au moins un lien vers une autre page, avec une adresse informatique, le serveur de consultation (16) transmet au télécopieur (1) l'adresse informatique de ladite autre page.

## Claims

1. Method for consulting, via a fax machine (1), which comprises means for connection to a computer network (100) and electronic mail service means, an information site (17) of the computer network (100), comprising at least one information page with a computer address (URL), in which
- the fax machine (1) prepares a request for acquisition of a page of the site (17) comprising an electronic message containing the address (URL) of the site (17),
- the fax machine (1) is connected to the computer network (100) by telephonic connection to an electronic mail server (2) and transmits the message to the server (2),
- the server (2) retransmits the message across the computer network (100) to a consultation server (16) and addresses the request for acquisition of a page of the site (17), containing the computer address of said page, to the consultation server (16) of the computer network (100) and
- the server (16) acquires the requested page in order to retransmit it to the fax machine (1).

2. Method according to claim 1, in which the fax machine (1) sends the acquisition request to the server (16) by electronic message.

3. Method according to one of the claims 1 and 2, in which the server (16) inserts the requested page into an electronic message in order to retransmit it to the fax machine (1).

4. Method according to claim 3, in which the consultation server (16) transmits the message containing the requested page to the electronic mail server (2) which stores it temporarily, until downloading thereof into the fax machine (1), upon request of the latter.

5. Method according to claim 4, in which the consultation server (16) temporarily stores the message containing the requested page in a local mailbox until transmission thereof to the requesting fax machine, upon request of the latter.

6. Method according to one of the claims 1 to 3, in which the fax machine (1) is connected to the consultation server (16), addresses the request for acquisition to it and, during the same connection, receives the requested page, after acquisition thereof by the consultation server (16).

7. Method according to one of the claims 1 to 6, in which the consultation server (16) translates the page into a format which can be used by the fax machine (1).

8. Method according to one of the claims 1 to 6, in which the consultation server (16) has the page translated, into a format which can be used by the fax machine (1), by a translation server.

9. Method according to one of the claims 7 and 8, in which the fax machine (1) transmits to the consultation server (16) its abilities to use the data.

10. Method according to one of the claims 1 to 9, in which, the requested page containing at least one link to another page, with a computer address, the consultation server (16) transmits to the fax machine (1) the computer address of said other page.

## Patentansprüche

1. Verfahren zum Abfragen einer Informations-Site (17) eines Datennetzes (100) über ein, Einrichtungen zur Verbindung mit dem Datennetz (100) und elektronische Postdiensteinxichtungen umfassendes Faxgerät (1), das mindestens eine Informationsseite mit einer Datenadresse (URL) umfasst, wobei
- das Faxgerät (1) eine Anforderung zur Beschaffung einer Seite der Site (17) erstellt, die aus einer elektronischen Nachricht besteht, welche die Adresse (URL) der Site (17) enthält,
- das Faxgerät (1) sich mit dem Datennetz (100) über eine Telefonverbindung mit einem Nachrichtenserver (2) verbindet und die Nachricht an den Server (2) überträgt,
- der Server (2) die Nachricht über das Datennetz (100) an einen Abfrageserver (16) weiterleitet und die Anforderung zur Beschaffung einer Seite der Site (17), welche die Datenadresse der Seite enthält, an den Abfrageserver (16) des Datennetzes (100) richtet, und
- der Server (16) die angeforderte Seite beschafft, um sie zum Faxgerät (1) weiterzuleiten.

2. Verfahren nach Anspruch 1, wobei das Faxgerät (1) die Anforderung zur Beschaffung über eine elektronische Nachricht an den Server (16) schickt.

3. Verfahren nach einem der Ansprüche 1 oder 2, wobei der Server (16) die angeforderte Seite in eine elektronische Nachricht einsetzt, um sie zum Faxgerät (1) weiterzuleiten.

4. Verfahren nach Anspruch 3, wobei der Abfrageserver (16) die Nachricht, welche die angeforderte Seite enthält, zum elektronischen Nachrichten-Server (2) überträgt, der sie bis zu ihrem Herunterladen auf das Faxgerät (1) auf dessen Anforderung hin vorübergehend speichert.

5. Verfahren nach Anspruch 4, wobei der Abfrageserver (16) die Nachricht, welche die angeforderte Seite enthält, bis zu ihrem Versand zum anfordernden Faxgerät auf dessen Anforderung hin in einem lokalen Nachrichtenspeicher speichert.

6. Verfahren nach einem der Ansprüche 1 bis 3, wobei sich das Faxgerät (1) mit dem Abfrageserver (16) verbindet, die Anforderung zur Beschaffung an ihn richtet, und im Verlauf derselben Verbindung die angeforderte Seite empfängt, nachdem sie durch den Abfrageserver (16) beschafft wurde.

7. Verfahren nach einem der Ansprüche 1 bis 6, wobei der Abfrageserver (16) die Seite in ein durch das Faxgerät (1) verarbeitbares Format umsetzt.

8. Verfahren nach einem der Ansprüche 1 bis 6, wobei der Abfrageserver (16) die Seite durch einen Umsetzungsserver in ein durch das Faxgerät (1) verarbeitbares Format umsetzen lässt.

9. Verfahren nach einem der Ansprüche 7 oder 8, wobei das Faxgerät (1) seine Datenverarbeitungsfähigkeiten an den Abfrageserver (16) überträgt.

10. Verfahren nach einem der Ansprüche 1 bis 9, wobei, wenn die angeforderte Seite mindestens einen Link zu einer anderen Seite mit einer Datenadresse enthält, der Abfrageserver (16) die Datenadresse der anderen Seite an das Faxgerät (1) überträgt.
